(19) 

Europäisches
Patentamt
European
Patent Office
Office européen
des brevets

(11) **EP 4 723 576 A1**

(12) **EUROPEAN PATENT APPLICATION**
published in accordance with Art. 153(4) EPC

(43) Date of publication:
08.04.2026 Bulletin 2026/15

(21) Application number: 24830679.7

(22) Date of filing: 24.06.2024

(51) International Patent Classification (IPC):
**H04L 41/147** (2022.01)

(52) Cooperative Patent Classification (CPC):
**H04B 17/318; H04B 17/336; H04B 17/345;
H04L 5/00; H04L 41/147; H04W 24/00**

(86) International application number:
**PCT/CN2024/100879**

(87) International publication number:
**WO 2025/002034 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.06.2023 CN 202310763447

(71) Applicants:
• **CHINA MOBILE COMMUNICATION CO., LTD
RESEARCH INSTITUTE**
**Beijing 100053 (CN)**
• **CHINA MOBILE COMMUNICATIONS GROUP CO.,
LTD.**
**Beijing 100032 (CN)**

(72) Inventors:
• **WANG, Yu**
**Beijing 100032 (CN)**
• **WU, Jie**
**Beijing 100032 (CN)**
• **ZHANG, Kai**
**Beijing 100032 (CN)**
• **XIE, Yuxuan**
**Beijing 100032 (CN)**

(74) Representative: **Novagraaf Technologies**
**2 rue Sarah Bernhardt**
**CS90017**
**92665 Asnières-sur-Seine Cedex (FR)**

(54) **INFORMATION PREDICTION METHOD AND APPARATUS, NETWORK DEVICE, AND NODE DEVICE**

(57) The present application provides an information prediction method and apparatus, a network device, and a node device. The method comprises: sending service transmission prediction information of a scheduling terminal at a first moment to a first node, wherein the service transmission prediction information comprises an uplink interference prediction value and/or a channel matrix prediction value, the first moment is after a second moment, and the second moment is the moment when the first node acquires an uplink reference signal sent by the terminal.

Send service transmission prediction information for a UE to be scheduled at a first moment to a first node, where the service transmission prediction information includes a predicted uplink interference value and/or a predicted channel matrix value, and the first moment is after a second moment at which the first node receives an uplink reference signal sent by the terminal — S110

**FIG. 1**

EP 4 723 576 A1

**Description**

CROSS-REFERENCE TO RELATED APPLICATION

This application claims priority to Chinese Patent Application No. 202310763447.3, filed on June 27, 2023 in China, the entire contents of which are incorporated herein by reference.

TECHNICAL FIELD

The present disclosure relates to the field of wireless technologies, and particularly to a method and an apparatus for information prediction, a network device, and a node device.

BACKGROUND

In communication systems of 4th generation mobile communication technology (4G) long term evolution (LTE) and 5th generation mobile communication technology (5G) new radio (NR), an adaptive modulation and coding (AMC) technology is usually used to cope with time-varying characteristics of a wireless channel to ensure transmission quality of a wireless link. AMC is a technology that adaptively adjusts a modulation scheme and coding rate of wireless link transmission according to changes in the wireless channel. When channel quality is poor, a lower-order modulation and coding scheme (MCS) is selected, while a higher-order MCS is selected when the channel quality is good. In this way, transmission efficiency of a wireless link can be maximized while ensuring the transmission reliability of the wireless link.
At present, inner-loop control and outer-loop control are usually used to select and adjust the MCS. In the inner-loop control, the base station selects an appropriate MCS value by looking up a table based on a signal to interference plus noise ratio (SINR) information obtained from measuring an uplink reference signal. In the outer-loop control, the base station adjusts the MCS value according to the success or failure of cyclic redundancy check (CRC) of a decoded physical uplink shared channel (PUSCH), so that a block error rate (BLER) gradually converges to a BLER target value.
In the existing MCS selection method, a moment at which the base station measures uplink (UL) SINR is different from a transmission moment of an uplink PUSCH data service to be scheduled, there is a gap of several milliseconds between the two, during which the channel quality has changed. In the case of large interference fluctuation, the base station cannot select an appropriate MCS according to the channel quality at the moment at which the uplink PUSCH data service transmission is to be scheduled, resulting in the selected MCS cannot meet the high reliability and low delay transmission requirements of wireless network transmission.

SUMMARY

An object of the technical solution of the present disclosure is to provide a method and an apparatus for information prediction, a network device, and a node device, to solve a problem that a moment at which the UL SINR is measured and obtained by a base station is different from a moment at which the uplink PUSCH data service transmission is to be scheduled, resulting in the selected MCS not matching the channel quality at the moment of the uplink PUSCH data service transmission, thus failing to meet the high reliability and low delay transmission requirements of wireless network transmission.
An embodiment of the present disclosure provides an information prediction method performed by a first network device. The method includes the following operations.
Service transmission prediction information for user equipment (UE) to be scheduled at a first moment is sent to a first node. The service transmission prediction information includes a predicted uplink interference value and/or a predicted channel matrix value. The first moment is after a second moment at which the first node receives an uplink reference signal sent by the UE.
Optionally, the information prediction method further includes the following operations.
A subscription request is sent to the first node. The subscription request is used for requesting to subscribe to measurement information corresponding to the UE obtained by the first node within a historical time period before the second moment.
First information sent by the first node according to the subscription request is received. The first information includes the measurement information.
The service transmission prediction information is determined based on the first information.
Optionally, in the information prediction method, the subscription request includes at least one of identification information of a subscribed UE, subscription content, or a reporting manner. The subscription content includes the measurement information requested for subscription, and the measurement information includes uplink interference and/or a channel matrix.

Optionally, in the information prediction method, the reporting manner includes periodic reporting.

Optionally, in the information prediction method, the historical time period includes a previous reporting period of a current reporting period, and/or a time interval between the previous reporting period and the current reporting period.

Optionally, in the information prediction method, the operation of receiving the first information sent by the first node according to the subscription request includes that:

first information sent by the first node to the first network device in the reporting manner according to the subscription request is received; the first information includes the subscription content.

Optionally, in the information prediction method, when the measurement information includes uplink interference, the uplink interference requested to be subscribed by the subscription content includes uplink interference respectively received on each transmission resource block in an operating frequency band of a serving cell in which the UE is located within multiple historical time periods.

When the measurement information includes a channel matrix, the channel matrix requested to be subscribed by the subscription content includes channel matrices corresponding to uplink reference signals received by the first node within multiple historical time periods.

Optionally, in the information prediction method, the uplink interference respectively received on each transmission resource block includes an interference power (RIP) respectively received on each transmission resource block and/or an interference over thermal (IOT) respectively received on each transmission resource block.

Optionally, in the information prediction method, the channel matrix is a $K \times M \times P$ dimensional matrix, K is a number of subcarriers in an operating frequency domain of the UE, P is a number of antennas of the UE, and M is a number of antennas of a receiving end of an uplink reference signal sent by the UE.

Optionally, in the information prediction method, the operation of determining the service transmission prediction information based on the first information includes that:

a predicted uplink interference value for the UE to be scheduled by the first node at the first moment is determined based on the uplink interference; and/or a predicted channel matrix value for the UE to be scheduled by the first node at the first moment is determined based on the channel matrix.

Optionally, in the information prediction method, the operation of determining the predicted channel matrix value for the UE to be scheduled by the first node at the first moment based on the channel matrix includes that:

channel matrices of the uplink reference signals received within the multiple historical time periods are transformed to obtain channel characteristic data of the uplink reference signals received within the multiple historical time periods; based on the channel characteristic data of the uplink reference signals received within the multiple historical time periods, a channel characteristic prediction value for the UE to be scheduled by the first node at the first moment are obtained; and the channel characteristic prediction value is inversely transformed to obtain the predicted channel matrix value for the UE to be scheduled by the first node at the first moment.

An embodiment of the present disclosure further provides an information prediction method performed by a first node, the method includes the following operations.

After receiving an uplink reference signal from a UE at a second moment, service transmission prediction information for the UE to be scheduled by the first node at a first moment is obtained. The service transmission prediction information includes a predicted uplink interference value and/or a predicted channel matrix value. The first moment is after the second moment.

An uplink channel quality at the first moment is determined/estimated based on the service transmission prediction information.

Optionally, the information prediction method further includes that:

according to the uplink channel quality at the first moment, a modulation and coding strategy (MCS) value for sending a physical downlink control channel to the UE is determined.

Optionally, the information prediction method further includes that:

a subscription request sent by a first network device is received; the subscription request is used for requesting to subscribe to measurement information corresponding to the UE obtained by the first node within a historical time period before the second moment; and first information is sent to the first network device according to the subscription request; the first information includes the measurement information.

The operation of obtaining the service transmission prediction information for the UE to be scheduled by the first node at the first moment includes that:

the service transmission prediction information sent by the first network device according to the first information is obtained.

Optionally, in the information prediction method, the subscription request includes at least one of identification information of a subscribed UE, subscription content, or a reporting manner. The subscription content includes the measurement information requested for subscription, and the measurement information includes uplink interference and/or a channel matrix.

Optionally, in the information prediction method, the reporting manner includes periodic reporting.

Optionally, in the information prediction method, the historical time period includes a previous reporting period of a current reporting period, and/or a time interval between the previous reporting period and the current reporting period.

Optionally, in the information prediction method, the operation of sending the first information to the first network device according to the subscription request includes that: according to the subscription request, the first information is sent to the first network device in the reporting manner.

Optionally, in the information prediction method, when the measurement information includes uplink interference, the uplink interference requested to be subscribed by the subscription content includes uplink interference respectively received on each transmission resource block in an operating frequency band of a serving cell in which the UE is located within multiple historical time periods.

When the measurement information includes a channel matrix, the channel matrix requested to be subscribed by the subscription content includes channel matrices corresponding to the uplink reference signals received by the first node within the multiple historical time periods.

Optionally, in the information prediction method, the uplink interference respectively received on each transmission resource block includes a RIP respectively received on each transmission resource block and/or an IOT respectively received on each transmission resource block.

Optionally, in the information prediction method, the channel matrix is a $K \times M \times P$ dimensional matrix, K is a number of subcarriers in an operating frequency domain of the UE, P is a number of antennas of the UE, and M is a number of antennas of a receiving end of an uplink reference signal sent by the UE.

Optionally, in the information prediction method, when the service transmission prediction information includes a predicted uplink interference value, the operation of obtaining the predicted uplink interference value for the UE to be scheduled by the first node at the first moment includes that:

a predicted uplink interference value for the UE to be scheduled at the first moment is determined according to the uplink interference respectively received on each transmission resource block in the operating frequency band of the serving cell in which the UE is located within the multiple historical time periods before the second moment.

Optionally, in the information prediction method, when the service transmission prediction information includes a predicted channel matrix value, the operation of obtaining the predicted channel matrix value for the UE to be scheduled by the first node at the first moment includes that:

channel matrices of the uplink reference signals received within the multiple historical time periods are determined according to historical channel data corresponding to the uplink reference signals received from the UE within the multiple historical time periods before the second moment;

channel matrices of the uplink reference signals received within the multiple historical time periods are transformed to obtain channel characteristic data of the uplink reference signals received within the multiple historical time periods;

according to the channel characteristic data of the uplink reference signals received within the multiple historical time periods, a channel characteristic prediction value for the UE to be scheduled by the first node at the first moment are obtained; and

the channel characteristic prediction value is inversely transformed to obtain the predicted channel matrix value for the UE to be scheduled by the first node at the first moment.

Optionally, in the information prediction method, the operation of determining/estimating the uplink channel quality at the first moment based on the service transmission prediction information includes that:

an uplink channel quality at the first moment is determined/estimated based on the predicted uplink interference value for the UE to be scheduled by the first node at the first moment and a signal strength of an uplink reference signal received by the first node at the second moment.

Optionally, in the information prediction method, the operation of determining the uplink channel quality at the first moment based on the service transmission prediction information includes that:

a predicted signal strength of an uplink reference signal received by the first node from the UE at the first moment is determined according to a predicted channel matrix value for the UE to be scheduled by the first node at the first moment;

an uplink channel quality at the first moment is determined based on the predicted signal strength and the predicted uplink interference value.

An embodiment of the present disclosure further provides a network device, the network device is a first network device and includes a transceiver, and the transceiver is configured to:
send service transmission prediction information for a UE to be scheduled at a first moment to the first node. The service transmission prediction information includes a predicted uplink interference value and/or a predicted channel matrix value. The first moment is after a second moment at which the first node acquires an uplink reference signal sent by the UE.

An embodiment of the present disclosure further provides a node device, the node device is a first node and includes a transceiver and a processor.

The transceiver is configured to acquire service transmission prediction information for a UE to be scheduled by the first node at a first moment after receiving an uplink reference signal from the UE at a second moment. The service transmission prediction information includes a predicted uplink interference value and/or a predicted channel matrix value. The first moment is after the second moment.

The processor is configured to determine/estimate an uplink channel quality at the first moment based on the service transmission prediction information.

An embodiment of the present disclosure further provides an information prediction apparatus, which is applied to a first network device, and includes that:
an information sending module, configured to send, to the first node, service transmission prediction information for a UE to be scheduled at a first moment; the service transmission prediction information includes a predicted uplink interference value and/or a predicted channel matrix value; the first moment is after a second moment at which the first node acquires an uplink reference signal sent by the UE.

An embodiment of the present disclosure further provides an information prediction apparatus, applied to a first node, the apparatus includes that:

an information acquisition module, configured to acquire service transmission prediction information for a UE to be scheduled by the first node at a first moment after receiving an uplink reference signal from the UE at a second moment; the service transmission prediction information includes a predicted uplink interference value and/or a predicted channel matrix value; the first moment is after the second moment; and
a determination module, configured to determine/estimate an uplink channel quality at the first moment based on the service transmission prediction information.

An embodiment of the present disclosure further provides a network device, the network device includes a processor, a memory, and a program stored in the memory and executable by the processor, and when the program is executed by the processor, the information prediction method according to any one of the items is implemented.

An embodiment of the present disclosure further provides a readable storage medium, a program is stored on the readable storage medium, and when the program is executed by a processor, the steps in the information prediction method according to any one of the items are implemented.

At least one of the above technical solutions of the present disclosure has the following beneficial effects:

According to the information prediction method provided by the embodiment of the present disclosure, the first network device can send the service transmission prediction information for the UE to be scheduled at the first moment to the first node, the first moment is after the second moment of acquiring an uplink reference signal sent by the UE, so that the first node can determine/estimate the uplink channel quality based on the service transmission prediction information for the UE to be scheduled at the first moment, and ensure that the selected MCS value can meet the channel quality of the uplink PUSCH data service transmission time, thereby avoiding the problem that the high reliability and low latency transmission requirements of wireless network transmission are not met due to the selected MCS value not conforming to the channel quality of the uplink PUSCH data service transmission time.

BRIEF DESCRIPTION OF THE DRAWINGS

FIG. 1 is a flowchart of a method for information prediction according to a first embodiment of the present disclosure.
FIG. 2 is a flowchart of an implementation of the method according to the embodiment of the present disclosure.
FIG. 3 is a flowchart of another implementation of the method according to the embodiment of the present disclosure;
FIG. 4 is a flowchart of a method for information prediction according to a second embodiment of the present disclosure.
FIG. 5 is a schematic structural diagram of a network device according to an embodiment of the present disclosure.
FIG. 6 is a schematic structural diagram of a node device according to an embodiment of the present disclosure.
FIG. 7 is a schematic structural diagram of an apparatus for information prediction according to a first embodiment of the present disclosure.

FIG. 8 is a schematic structural diagram of an apparatus for information prediction according to a second embodiment of the present disclosure.

DETAILED DESCRIPTION

In order to make the technical problems, technical solutions, and advantages to be solved by the present disclosure clearer, the following will be described in detail with reference to the drawings and specific embodiments.

In the related art, during selecting a MCS value, a moment at which the UL SINR is measured and obtained by a base station is different from a moment at which the uplink PUSCH data service transmission is to be scheduled, resulting in the selected MCS not matching the channel quality at the moment of the uplink PUSCH data service transmission, thus failing to meet the high reliability and low delay transmission requirements of wireless network transmission. In order to solve the above technical problem, the embodiment of the disclosure provides an information prediction method, the first network device can send the service transmission prediction information for the UE to be scheduled at the first moment (i.e., the UE sends PUSCH) to the first node, the first moment is after the second moment of acquiring an uplink reference signal sent by the UE, so that the first node can determine/estimate the uplink channel quality based on the service transmission prediction information for the UE to be scheduled at the first moment, and ensure that the selected MCS value can meet the channel quality of the uplink PUSCH data service transmission time, thereby avoiding the problem that the high reliability and low latency transmission requirements of wireless network transmission are not met due to the selected MCS value not conforming to the channel quality of the uplink PUSCH data service transmission time.

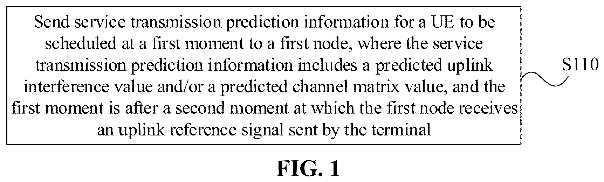

An embodiment of the present disclosure provides a method for information prediction, which is executed by a first network device, and as illustrated in FIG. 1, the method includes the following operations.

At S110, service transmission prediction information for a UE to be scheduled at a first moment is sent to the first node. The service transmission prediction information includes a predicted uplink interference value and/or a predicted channel matrix value. The first moment is after a second moment at which the first node receives an uplink reference signal sent by the UE.

That is, the second moment is a moment at which the first node receives the uplink reference signal sent by the UE.

In an embodiment of the present disclosure, optionally, the first network device may be a node device, a network unit, or a module capable of performing uplink interference prediction and channel prediction. The first node is a base station to which the UE is communicatively connected. Optionally, multiple UEs may be involved.

In an embodiment of the present disclosure, optionally, the first moment is a moment at which the base station schedules the UE, that is, a moment at which the UE sends the PUSCH to the base station. The second moment is a moment at which the base station acquires the uplink reference signal sent by the UE, which is before the first moment.

In addition, the embodiment of the present disclosure may further include a third moment between the second moment and the first moment. At the third moment, the base station sends physical downlink control channel (PDCCH) data including a MCS value selected by the base station to the UE. Then, the UE sends the PUSCH to the base station based on the PDCCH data sent by the base station.

In an embodiment of the present disclosure, a moment at which the first network device sends the service transmission prediction information to the first node is after the second moment and before the third moment, so that the first node (for example, a base station) can determine/ estimate uplink channel quality according to the service transmission prediction information for scheduling the UE at the first moment, so as to select a more appropriate MCS for an uplink data service to be sent, realize an enhancement of an AMC algorithm, and ensure the demand for high reliability and low delay of the wireless network.

Optionally, in an embodiment, the method further includes the following operations.

A subscription request is sent to the first node. The subscription request is for requesting to subscribe to measurement information corresponding to the UE obtained by the first node within a historical time period before the second moment.

First information sent by the first node according to the subscription request is received. The first information includes the measurement information.

The service transmission prediction information is determined based on the first information.

In this implementation, the first network device has a capability to perform uplink interference prediction and channel prediction. The first network device can send the subscription request to the first node, obtain first information fed back by the first node according to the subscription request, and determine service transmission prediction information.

In an embodiment of the present disclosure, optionally, the first network device sends the subscription request to the first node through an interface connected to the first node.

In an implementation, optionally, the subscription request includes at least one of the following: identification information of a subscribed UE, subscription content, or a reporting manner. The subscription content includes the measurement information requested to be subscribed, and the measurement information includes uplink interference and/or a channel matrix.

Optionally, the reporting manner includes, but is not limited to, periodic reporting.

Further, the historical time period includes a previous reporting period of the current reporting period, and/or a time interval between the previous reporting period and the current reporting period.

In an implementation, optionally, the measurement information includes uplink interference, and the uplink interference requested to be subscribed by the subscription content includes uplink interference respectively received on each transmission resource block in an operating frequency band of a serving cell where the UE is located within multiple historical time periods.

The measurement information includes a channel matrix. The channel matrix requested to be subscribed by the subscription content includes channel matrices corresponding to uplink reference signals received by the first node within the multiple historical time periods.

Specifically, the uplink interference respectively received on each transmission resource block includes an uplink interference value (i.e., received interference power, RIP) and/or an interference over thermal (IOT) value respectively received on each transmission resource block.

Optionally, the transmission resource block includes a resource block (RB) and/or a resource block group (RBG).

Specifically, the subscription request sent by the first network device to the first node is used to request a RIP respectively received on each RB/RBG and/or a IOT respectively received on each RB/RBG in a historical time period (i.e., the previous reporting period of the current reporting period and/or the time interval between the previous reporting period and the current reporting period) within the operating frequency band of the serving cell where the subscribed UE is located. In an embodiment of the present disclosure, optionally, the uplink interference in the time interval between the previous reporting period and the current reporting period requested to be subscribed is an average interference value within this time period.

And/or, the subscription request is used to request a channel matrix of the subscribed UE within a historical time period (i.e., a previous reporting period of the current reporting period, and/or a time between the previous reporting period and the current reporting period). The channel matrix is a $K \times M \times P$ dimensional matrix, where K is a number of subcarriers in the operating frequency band of the UE, P is a number of antennas of the UE, and M is a number of antennas of a receiving end of the uplink reference signal sent by the UE. In an embodiment of the present disclosure, optionally, the channel matrix within the time interval between the previous reporting period and the current reporting period requested to be subscribed includes sampling data of all channel matrices within the time period.

In another embodiment of the present disclosure, optionally, after obtaining a subscription request sent by the first network device, the first node (for example, a base station) sends first information to the first network device through an interface connected to the first network device according to the subscription request. The first information includes measurement information requested to be subscribed by the first network device, that is, includes uplink interference and/or channel matrix requested to be subscribed.

The operation that the first network device receives the first information sent by the first node according to the subscription request includes the following action.

The first information sent by the first node to the first network device in the reporting manner according to the subscription request is received. The first information includes the subscription content.

Specifically, the subscription content includes uplink interference and/or a channel matrix.

The subscription content in the first information includes a RIP respectively received on each RB/RBG and/or an IOT respectively received on each RB/RBG in a historical time period (i.e., a previous reporting period of a current reporting period and/or a time interval between the previous reporting period and the current reporting period) within the operating frequency band of the serving cell where the UE is located. In an embodiment of the present disclosure, in the subscription content included in the first information, the uplink interference within the time interval between the previous reporting period and the current reporting period is an average interference value within this time period.

For example, taking the uplink interference in the first information including RIP as an example, the respective RIP received on each RB or RBG in a historical time period may be as shown in Table 1 below.

Table 1

| RB or RBG number | RIP |
|---|---|
| 1 | -70 |
| 2 | -80 |
| 3 | -85 |
| ... | ... |
| M | -76 |

In addition, the subscription content in the first information includes a channel matrix of the UE in a historical time period (i.e., a previous reporting period of the current reporting period, and/or a time interval between the previous reporting period and the current reporting period). The channel matrix is a $K \times M \times P$ dimensional matrix, where K is a number of subcarriers in the operating frequency band of the UE, P is a number of antennas of the UE, and M is a number of antennas of a receiving end of an uplink reference signal sent by the UE. In an embodiment of the present disclosure, in the subscription content included in the first information, the channel matrix within the time interval between the previous reporting period and the current reporting period includes sampling data of all the channel matrices within this time period.

In an embodiment of the present disclosure, the operation that the first network device determines the service transmission prediction information according to the first information sent by the first node to the first network device in the reporting manner includes the following action.

A predicted uplink interference value for the UE to be scheduled by the first node at a first moment is determined based on the uplink interference; and/or a predicted channel matrix value for the UE to be scheduled by the first node at the first moment is determined based on the channel matrix.

Specifically, the first network device performs data processing, model training, and model inference based on the uplink interference and/or the channel matrix within a preset historical time range reported by the first node, and generates the predicted uplink interference value and the channel prediction value.

When the first network device determines the predicted uplink interference value for the first node scheduling the UE at the first moment based on the uplink interference, the first network device may implement the uplink interference prediction using an artificial intelligence (AI) technology.

Specifically, the first network device converts uplink interference within a preset historical time range into a supervised learning dataset, and predicts uplink interference at a future time, to obtain a predicted uplink interference value.

Taking an interval between historical time periods within the preset historical time range being one transmission time interval (TTI) as an example, RIPs respectively received on each transmission resource block in the operating frequency band of the serving cell where the UE is located within T historical time periods before the second moment t can be expressed as shown in Table 2, where T is an integer greater than or equal to 1.

Table 2

| Time/ RB or RBG number | t - T | t - T + 1 | ... | t |
|---|---|---|---|---|
| 1 | $RIP_1(t - T)$ | $RIP_1(t - T + 1)$ | ... | $RIP_1(t)$ |
| 2 | $RIP_2(t - T)$ | $RIP_2(t - T + 1)$ | ... | $RIP_2(t)$ |
| ... | ... | ... | ... | ... |
| M | $RIP_M(t - T)$ | $RIP_M(t - T + 1)$ | ... | $RIP_M(t)$ |

According to the respective RIPs received on each transmission resource block in the operating frequency band of the serving cell where the UE is located within the T historical time periods, RIPs at the k-th moment (for example, the first moment) after the second moment t may be determined. That is, the respective RIPs received on each transmission resource block in the operating frequency band of the serving cell where the UE is located may be determined, as shown in Table 3 below.

Table 3

| RB or RBG number | t + k |
|---|---|
| 1 | $RIP_1(t + k)$ |
| 2 | $RIP_2(t + k)$ |
| ... | ... |
| M | $RIP_M(t + k)$ |

Specifically, the respective RIPs received on each transmission resource block in the operating frequency band of the serving cell where the UE is located within the T historical time periods (as shown in Table 2) may be used as an input, and an AI algorithm may be used to use the training and inference process of the AI model to obtain a predicted uplink interference value respectively received on each transmission resource block at the first moment when the UE is scheduled, for example, the RIPs as shown in Table 3 may be obtained.

Optionally, the AI algorithm includes, but is not limited to, an algorithm that uses a distributed gradient enhancement library xgboost, a long short-term memory network (LSTM), a temporal convolution network, and the like.

In another implementation of the information prediction method provided by the embodiment of the present disclosure, the operation of determining the predicted channel matrix value for the first node scheduling the UE at the first moment based on the channel matrix includes the following action.

Channel matrices of the uplink reference signals received within multiple historical time periods are transformed to obtain channel characteristic data of the uplink reference signals received within the multiple historical time periods.

Based on the channel characteristic data of the uplink reference signals received within the multiple historical time periods, a channel characteristic prediction value for the first node scheduling the UE at a first time are obtained.

Inverse transformation is performed on the channel characteristic prediction value to obtain the predicted channel matrix value for the UE to be scheduled by the first node at the first moment.

In this embodiment, the first node (i.e., the base station) continuously monitors and records, at each base station antenna, a respective received signal characteristics of the uplink reference signal sent by the to-be-scheduled UE on the access carrier, obtains historical channel data corresponding to the uplink reference signal sent by the UE within historical time periods before the second moment, determines channel matrices of the uplink reference signals received within the multiple historical time periods, sends the channel matrices within the multiple historical time periods to the first network device. Based on the channel matrices within the multiple historical time periods, the first network device determines the predicted channel matrix value for the first node scheduling the UE at the first moment.

Specifically, the correspondences between the respective received signal characteristics of the uplink reference signal sent by the base station-scheduled UE on the access carrier at each base station antenna and the channel matrix of the uplink reference signal can be expressed by the following formula 1:

$$\text{Formula 1:} \quad Y(k,r) = \sum_{p=0}^{P-1} H(k,r,p)X(k,p) + I + N$$

where Y (k, r) represents channel data of the uplink reference signal received by the base station on the k-th subcarrier and the r-th antenna from the scheduled UE; X (k, p) represents channel data of the uplink reference signal sent by the UE on the k-th subcarrier in the frequency domain and the p-th antenna. The signal characteristic of the uplink reference signal sent by the UE is configured by the base station to the sending end through higher-layer signaling and uplink outer-loop power control. H (k, r, p) represents the channel matrix of the uplink reference signal sent on the k-th subcarrier from the p-th antenna of the UE to the r-th antenna of the base station, I represents the uplink interference received by the base station, and N represents the white noise.

Therefore, a channel matrix at an uplink reference signal reception moment t (i.e., the second moment) can be determined according to the correspondences between the channel matrix of the uplink reference signal received by the base station, the channel data of the uplink reference signal received by the base station from the scheduled user, and the channel data of the uplink reference signal sent by the UE, which is expressed as $H_t(k, r, p)$. Based on this principle, channel matrices of uplink reference signals received at multiple historical moments or within multiple historical time periods can be obtained.

In an embodiment of the present disclosure, according to the above, the historical channel data includes first channel data of the uplink reference signal sent by the UE on the k-th subcarrier and the p-th antenna, and second channel data of the uplink reference signal received by the base station on the r-th antenna and the k-th subcarrier from the UE.

The channel matrices represent channel matrices of uplink reference signals sent on a k-th subcarrier within multiple historical time periods and sent from a p-th antenna of the UE to an r-th antenna of the base station, where k, p, and r are integers greater than 0.

The respective channel matrix of the uplink reference signal received within each historical time period may be formed as a matrix of K × M × P dimensions, where K is a number of subcarriers of the scheduled UE in the operating frequency domain, M is a number of antennas of the base station, and P is a number of antennas of the UE.

In the information prediction method according to the embodiment of the present disclosure, when the first network device obtains the predicted channel matrix value for scheduling the UE at the first moment, after the first node (i.e., the base station) obtains the channel matrices of the uplink reference signals received within the multiple historical time periods, the first network device transforms the channel matrices of the uplink reference signals received within the multiple historical time periods to obtain channel characteristic data of the uplink reference signals received within the multiple historical time periods.

Specifically, the following formula 2 may be used to transform the channel matrix of the uplink reference signal received at the second moment t to obtain the channel characteristic data of the uplink reference signal received at the second moment t:

$$\text{Formula 2:} \quad H_t(\widetilde{k,r,p}) = H_t(k,r,p) \times G$$

Where $H_t(k, r, p)$ represents the channel matrix of the received uplink reference signal at the second moment t; $H_t\widetilde{(k, r, p)}$ represents the channel characteristic data of the received uplink reference signal at the second moment t after transformation; and G represents the structure transformation matrix.

Optionally, the channel matrix of the uplink reference signal received at the second moment t may be transformed using a structural transformation method such as multi-dimensional discrete Fourier transform (DFT) or singular value decomposition (SVD). Therefore, the structure transformation matrix G may be a DFT matrix in a multi-dimensional DFT or a transformation orthogonal basis in an SVD transform.

By adopting this principle, by transforming the respective channel matrix of the uplink reference signal received within each of the multiple historical time periods (for example, t1, t2,..., tT), the respective channel characteristic data of the uplink reference signal received within each historical time period is obtained, that is, the predictable channel characteristics in the time domain are obtained, which can be recorded as: $H_{t1}\widetilde{(k, r, p)},\ H_{t2}\widetilde{(k, r, p)}, \ldots H_{tT}\widetilde{(k, r, p)}$ .

Further, based on the channel characteristic data of the uplink reference signals received within the multiple historical time periods, a channel characteristic prediction value for scheduling the UE at the first moment may be obtained.

Optionally, an autoregressive model (AR) may be applied to the time series prediction to obtain a channel characteristic prediction value for scheduling the UE at the first moment based on the channel characteristic data of the uplink reference signals received within the multiple historical time periods.

Specifically, the following formula 3 may be used to obtain the channel characteristic prediction value $H_S\widetilde{(k, r, p)}$ for scheduling the UE at a first moment S:

$$\text{Formula 3:}\quad H_S\widetilde{(k, r}, p) = \sum_{i=1}^{m} \varphi_i H_{S-i}\widetilde{(k, r}, p) + u_S$$

where $H_{S-i}(k, r, p)$ represents channel characteristic data in an TTI before the first moment S; m represents the order of the AR model, indicating that the channel characteristics at the moment S are correlated with the channel characteristics in m historical time periods; $\varphi_i$ represents an autoregressive coefficient of channel characteristics, and $u_S$ represents the random disturbance term.

According to this embodiment, multiple time series can be used for training to obtain coefficients of the AR model, which are used for predicting a next time sample at a distance of 1 TTI, and a time sample at a distance of k TTIs can be predicted using a time-domain sliding. Thus, based on this principle, a channel characteristic prediction value for scheduling the UE at the first moment S after multiple historical time periods can be obtained based on the channel characteristic data of the uplink reference signals received in the multiple historical time periods.

Further, after obtaining the channel characteristic prediction value for scheduling the UE at the first moment based on the channel characteristic data of the uplink reference signals received in the multiple historical time periods, the channel characteristic prediction value is inversely transformed to obtain the predicted channel matrix value of the UE to be scheduled at the first moment.

Specifically, the following formula 4 may be used to inversely transform the channel characteristic prediction value to obtain the predicted channel matrix value $H_S\widetilde{(k, r, p)}$ for scheduling the UE at the first moment S:

$$\text{Formula 4:}\ H_S\widetilde{(k, r, p)} = H_S\widetilde{(k, r}, p) \times G^H$$

Where $G^H$ is a structure transformation matrix.

Based on the traditional adaptive modulation and coding (AMC) algorithm, when the base station needs to send uplink data service scheduling control information (i.e., dedicated control information, DCI) to the UE, the base station uses its most recently measured uplink reference signal to calculate the channel quality. However, the time for future uplink data service transmission is outdated, so an appropriate MCS cannot be selected. According to the information prediction method according to the embodiment of the present disclosure, the first network device sends the predicted uplink interference value and/or the predicted channel matrix value of the scheduled UE at the first moment obtained according to the above method to the first node (i.e., the base station), and the base station may determine/estimate the uplink channel quality at the first moment based on the predicted uplink interference value and/or the predicted channel matrix value, so as to use it for MCS value calculation, to ensure that the selected MCS value can meet the channel quality at the time of uplink PUSCH data service transmission.

In one embodiment, the operation that the first node (i.e., the base station) determines/ estimates the uplink channel quality at the first moment based on the service transmission prediction information includes that the following actions.

The uplink channel quality at the first moment is determined/estimated based on the predicted uplink interference value for the UE to be scheduled at the first moment and a signal strength of an uplink reference signal received at the second moment.

Specifically, based on predicted uplink interference values of the RB/RBG level at the first moment, the base station converts the predicted uplink interference values into an average predicted uplink interference value or a maximum predicted uplink interference value in each RB/RBG in one frequency domain for the scheduled UE by averaging the values in units of RB/RBG, which is used for the base station to calculate the uplink channel quality.

In an example, the base station receives the uplink reference signal at a time domain position of $(n-\mu)$ tti, and the base station needs to send the uplink data service scheduling control information (DCI) to the UE at a time domain position of $(n+\Delta)$ tti. The first moment is $(n+\Delta)$ tti, the second moment is $(n-\mu)$ tti, and the uplink channel quality calculated by the base station is SINR. The base station measures the uplink reference signal $Y(n-\mu)$ at the second moment, and obtains an useful signal strength $S(n-\mu)$ and signal-to-noise ratio UL_SINR$(n-\mu)$ at the RB/RBG level through channel estimation and baseband processing. Based on the predicted uplink interference value for the UE to be scheduled at the first moment $(n+\Delta)$ tti and the signal strength of the uplink reference signal received by the base station at the second moment $(n-\mu)$ tti, the uplink channel quality UL_SINR $(n+\Delta)$ at the first moment $(n+\Delta)$ tti can be determined using the following formula 5:

$$\text{Formula 5:} \quad \text{UL\_SINR}(n+\Delta) = \frac{S(n-\mu)}{\text{RIP}(n+\Delta)+\hat{N}}$$

where $\hat{N}$ represents Gaussian white noise, RIP $(n+\Delta)$ represents the predicted uplink interference value of RB/RBG level at the first moment $(n+\Delta)$ tti, and $n$, $\mu$, $\Delta$ are integers greater than or equal to 1.

In this embodiment, in a scenario where the UE is stationary or moving slowly, the reference signal strength $S(n-\mu)$ received by the base station does not change much, and the uplink channel quality at the first moment can be determined by using the above-described formula 5.

In another embodiment, in a scenario in which the UE moves at a high speed or the channel changes rapidly, the operation that the first node (i.e., the base station) determines the uplink channel quality at the first moment based on the service transmission prediction information includes the following actions.

A predicted signal strength of an uplink reference signal received from the UE at the first moment is determined based on a predicted channel matrix value for the UE to be scheduled at the first moment.

The uplink channel quality at the first moment is determined/estimated based on the predicted signal strength and the predicted uplink interference value.

Specifically, the predicted channel matrix value $\widetilde{H_{n+\Delta}(k,r,p)}$ of the UE scheduled by the base station at the first moment $(n+\Delta)$ tti may be calculated according to the calculation procedures of the above formulas 1 to 4, and the predicted signal strength $S_{n+\Delta}(k,r)$ of the uplink reference signal sent by the UE at each subcarrier received by the base station at the first moment $(n+\Delta)$ tti may be further calculated according to the following formula 6:

$$\text{Formula 6:} \quad S_{n+\Delta}(k,r) = \sum_{p=0}^{P-1} \widetilde{H_{n+\Delta}(k,r,p)} X_{n+\Delta}(k,p)$$

$$\text{Formula 7:} \quad S(n+\Delta) = \frac{1}{N\_sc} \sum_{k=1}^{K} \sum_{r=1}^{R} S_{n+\Delta}(k,r)$$

where $X_{n+\Delta}(k,p)$ represents an uplink reference signal sent by the UE on the k-th subcarrier and the p-th antenna at the moment $(n+\Delta)$ tti, and $X_{n+\Delta}(k,p)$ is known by the base station according to the configuration of the UE by the base station and the uplink power control function; K represents a total number of subcarriers of the scheduled UE i in a certain frequency domain; R represents the number of receiving antennas of the base station; P represents a total number of antennas of the UE; and N_sc represents a number of subcarriers included in each RB/RBG.

Further, according to Formula 7, the average useful signal strength $S(n+\Delta)$ per RB/RBG in a certain frequency band for the scheduled UE at the moment $(n+\Delta)$ tti may be calculated, which is used for calculating the uplink channel quality at the moment $(n+\Delta)$ tti, such as UL_SINR$(n+\Delta)$.

Specifically, the uplink channel quality UL_SINR$(n+\Delta)$ at the moment $(n+\Delta)$ tti may be calculated according to the following Formula 8:

$$\text{Formula 8:} \quad \text{UL\_SINR}(n+\Delta) = \frac{S(n+\Delta)}{\text{RIP}(n+\Delta)+\hat{N}}$$

It should be noted that the above-described method of determining the uplink channel quality at the first moment based on the service transmission prediction information is merely an example, and is not limited thereto, and an example is not described separately for each embodiment here.

In an embodiment of the present disclosure, optionally, the method further includes the following operations.

The first node determines/estimates an uplink channel quality for calculating an MCS value according to the uplink channel quality at the first moment and an uplink channel quality cumulatively calculated in combination with results of multiple CRC checks.

Specifically, according to the outer-loop control, the uplink channel quality is cumulatively calculated in combination with the results of the multiple CRC checks. The uplink channel quality calculated using the outer-loop control can be used to calibrate the uplink channel quality calculated using the inner-loop control, thereby achieving the purpose of timely and accurately reflecting the real channel quality.

When the CRC check result is positive, the uplink channel quality at the first moment calculated according to the above method may be increased by a first preset value; when the CRC check result is negative, the uplink channel quality at the first moment calculated according to the above method may be decreased by a second preset value, so that the accurate uplink channel quality at the first moment is determined by combining the CRC check result with the uplink channel quality at the first moment predicted using the above method.

In addition, in an embodiment of the present disclosure, the first node determines, according to the uplink channel quality at the first moment, a modulation and coding strategy (MCS) value of a physical downlink control channel (PDCCH) to be sent to the UE at a third moment, which includes the following operations.

A correspondence between an uplink channel quality (for example, a SINR) and an MCS value is determined according to a calculation or table lookup method, and the MCS value of the PDCCH to be sent to the UE at the third moment is determined.

After determining the MCS value, the base station sends a physical downlink control channel (PDCCH) to the UE at the third moment.

In this embodiment, based on the uplink interference information and the channel matrices within the multiple historical time periods reported by the base station, the first network device predicts an uplink interference value of the UE to be scheduled at the first moment and predicts an channel matrix value of the UE to be scheduled at the first moment, and sends the predicted uplink interference value and/or the predicted channel matrix value to the base station, and the base station determines/estimates the uplink channel quality at the first moment based on the received predicted uplink interference value and/or the predicted channel matrix value.

In the information prediction method according to the embodiment of the present disclosure, in another implementation, the first node (i.e., the base station) may predict the uplink interference of the UE to be scheduled at the first moment to obtain service transmission prediction information, that is, to obtain the predicted uplink interference value and/or the predicted channel matrix value for the UE to be scheduled at the first moment.

Specifically, the first node (i.e., the base station) determines a predicted uplink interference value for the UE to be scheduled at the first moment based on an uplink interference respectively received on each transmission resource block in the operating frequency band of the serving cell where the UE is located within multiple historical time periods before the second moment. And/or,

the first node (i.e., the base station) determines channel matrices of the uplink reference signals received within the multiple historical time periods based on historical channel data corresponding to the uplink reference signals received from the UE within the multiple historical time periods before the second moment;
the channel matrices of the uplink reference signals received within the multiple historical time periods are transformed to obtain channel characteristic data of the uplink reference signals received within the multiple historical time periods;
a channel characteristic prediction value for the UE to be scheduled by the first node at the first moment is obtained based on the channel characteristic data of the uplink reference signals received within the multiple historical time periods; and
the channel characteristic prediction value is inversely transformed to obtain the predicted channel matrix value for the UE to be scheduled by the first node at the first moment.

The specific implementation in which the first node (i.e., the base station) predicts the uplink interference of the scheduled UE at the first moment and obtains the predicted uplink interference value and/or the predicted channel matrix value of the scheduled UE at the first moment may be the same as the specific implementation in which the first network device determines the predicted uplink interference value and/or the predicted channel matrix value of the scheduled UE at the first moment, and the description will not be repeated here.

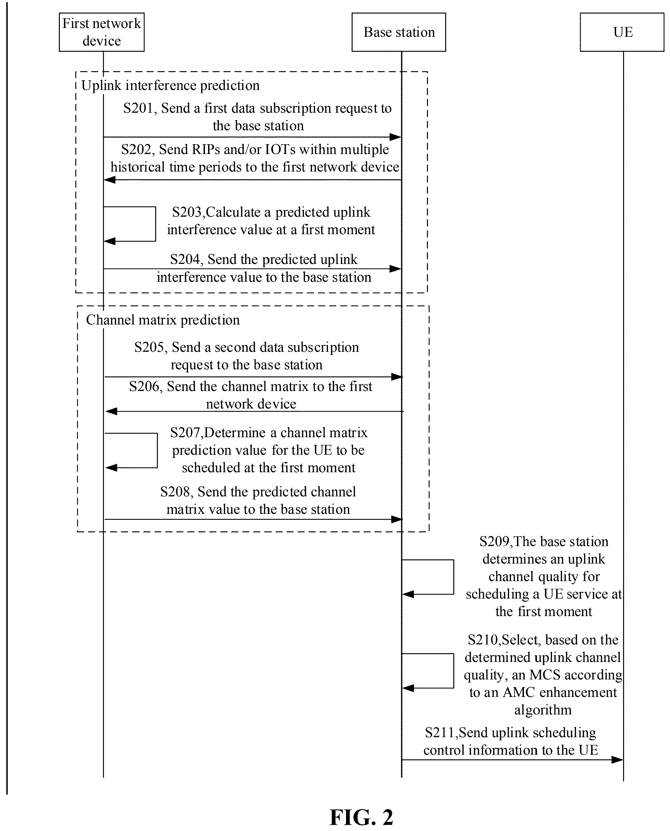

In an embodiment of the present disclosure, a specific implementation in which a first network device determines, based on uplink interference information and channel matrix, an predicted uplink interference value and/or a predicted channel matrix value for a UE scheduled by a base station at a first moment may include the following operations as shown in FIG. 2.

At S201: the first network device (i.e., an uplink interference prediction module) sends a first data subscription request to the base station to request subscription to uplink interference information.

Specifically, the first data subscription request is used to request to subscribe to a RIP respectively received on each RB/RBG or an IOT respectively received on each RB/RBG within the operating frequency band of the serving cell where the UE is located.

At S202: the base station periodically sends RIPs and/or IOTs within multiple historical time periods to the first network device according to the first data subscription request.

At S203: the first network device calculates a predicted uplink interference value at a first moment based on the RIPs and/or IOTs within the multiple historical time periods. The predicted uplink interference value at the first moment may be the RIP and/or IOT respectively received on each RB/RBG when the UE is scheduled at the first moment. Specifically, the training and inference process of the AI model may be used to obtain the RIP and/or IOT respectively received on each transmission resource block when the UE is scheduled at the first moment.

At S204: the first network device sends the predicted uplink interference value at the first moment to the base station.

At S205: the first network device (i.e., the uplink interference prediction module) sends a second data subscription request to the base station to request subscription to a user channel matrix.

At S206: the base station sends the channel matrix to the first network device according to the second data subscription request sent by the first network device.

Optionally, the base station sends, to the first network device, channel matrices corresponding to uplink reference signals received from the UE within the multiple historical time periods, or requests scheduling to statistically receive channel matrices corresponding to uplink reference signals sent by the UE at the current time. A channel matrix of the uplink reference signal received within each historical time period may be formed as a k * M * p dimensional matrix, where k is the number of subcarriers of the scheduled UE in the operating frequency domain, M is the number of antennas of the base station, p is the number of antennas of the UE, and represents a channel matrix of the uplink reference signal sent on the k-th subcarrier within each of the multiple historical time periods and sent from the p-th antenna of the UE to the r-th antenna of the base station; where k, p, and r are all integers greater than 0.

Specifically, according to Formula 1, the base station may determine channel matrices corresponding to the uplink reference signals received from the UE within the multiple historical time periods, and the specific determination method may be described in conjunction with the above-described detailed description, and will not be repeated here.

At S207: the first network device determines a predicted channel matrix value of the UE to be scheduled at the first moment based on the received channel matrices corresponding to the uplink reference signals received from the UE within the multiple historical time periods.

Specifically, the first network device may determine the predicted channel matrix value of the UE to be scheduled at the first moment in accordance with the above-described Formulas 2 to 4, and the specific implementation process will not be described in detail here.

At S208: the first network device sends the determined predicted channel matrix value at the first moment to the base station.

At S209: the base station determines an uplink channel quality of a UE service scheduled at the first moment based on the received predicted uplink interference value and the predicted channel matrix value at the first moment.

At S210: the base station selects, based on the determined uplink channel quality, an MCS according to an AMC enhancement algorithm.

At S211: the base station sends uplink scheduling control information to the UE at the first moment based on the selected MCS.

It should be noted that, in the embodiment of the present disclosure, the above-described operations S205 to S208 may be performed synchronously with the operations S201 to S204. That is, the first data subscription request and the second data subscription request are the same request, which is used to simultaneously request to subscribe to uplink interference information and a user channel matrix. The first network device may obtain the predicted uplink interference value and/or the predicted channel matrix value according to the request, and send them to the base station synchronously.

According to the adaptive modulation and coding method according to the embodiment of the present disclosure, in another implementation, the first network device includes a wireless intelligent control platform in an open radio access network (O-RAN) architecture.

The wireless intelligent control platform interacts with the base station through an E2 interface and has the following functions.

A data acquisition function, used to acquire uplink interference information respectively received on each transmission resource block in the operating frequency band of the serving cell where the UE is located within multiple historical time periods before the second moment, and to receive channel matrices corresponding to uplink reference signals sent by the UE within the historical time periods.

A data analysis and processing function for analyzing and processing the obtained uplink interference information and channel matrices.

The model training and inference function, used for training a prediction model to obtain a trained prediction model, and inputting the analyzed and processed uplink interference information and the channel matrices into the prediction model to obtain an predicted uplink interference value and/or a predicted channel matrix value at the RB level and/or the RBG level.

Further, the wireless intelligent control platform sends the obtained predicted uplink interference value and/or the predicted channel matrix value to the base station through the E2 interface. The base station analyzes and processes the predicted uplink interference value and/or the channel matrix prediction using the AMC algorithm, to obtain the uplink channel quality at the first moment, and determines the MCS value for sending uplink scheduling control information to the UE at the first moment based on the uplink channel quality.

In this embodiment, optionally, the wireless intelligent control platform includes a near-real-time (Near-RT) radio access network intelligent controller (RIC) platform and a xAPP platform. The xAPP platform is used to perform interference prediction, and sends a data subscription request to the Near-RT RIC platform through an RIC application programming interface (API). The Near-RT RIC platform further forwards the data subscription request to the base station through the E2 interface.

In this implementation, an E2 interface connecting the Near-RT RIC and the base station is enhanced to implement subscription and reception of uplink interference and channel matrix data by the Near-RT RIC. Based on Near-RT RIC/xAPP, training and/or real-time inference of models for uplink interference prediction and channel matrix prediction can be realized. The enhanced E2 interface enables Near-RT RIC to send uplink interference and predicted channel matrix value s. It is convenient for the base station to improve the accuracy of channel quality prediction, so as to select a more suitable MCS to meet the requirements of Ultra-reliable low latency communications (uRLLC) and other services for high reliability and low latency of wireless networks.

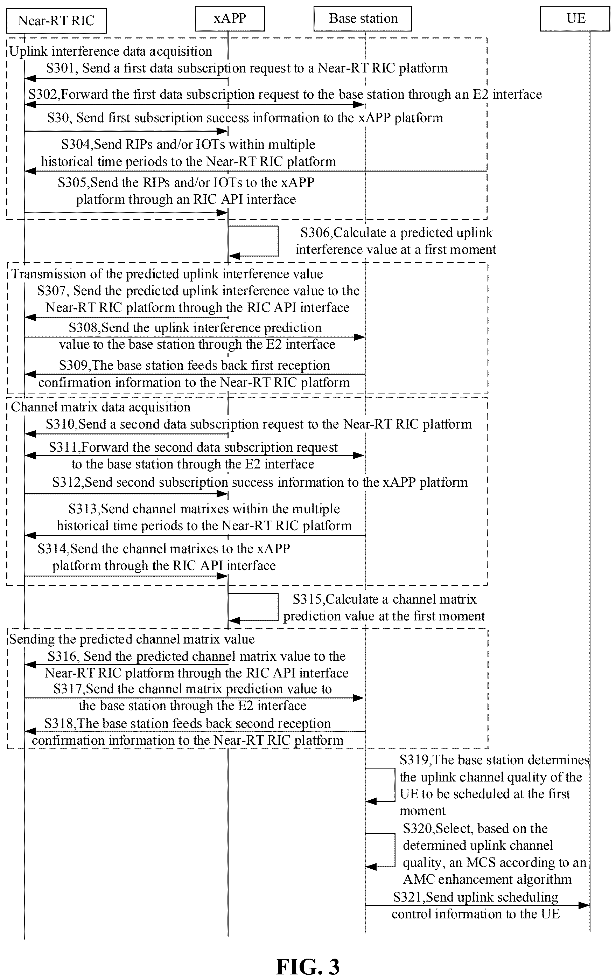

FIG. 3 is a schematic flowchart of an implementation of the adaptive coding method according to an embodiment of the present disclosure. The specific implementation process of the embodiment includes the following operations.

At S301: a xAPP platform sends a first data subscription request to a Near-RT RIC platform through an RIC API interface.

At S302: the Near-RT RIC platform forwards the first data subscription request to the base station through an E2 interface.

The first data subscription request is used for requesting subscription to uplink interference information.

Specifically, the first data subscription request is used for requesting subscription to a RIP or an IOT respectively received on each RB/RBG within an operating frequency band of a serving cell where a UE is located.

At S303: the Near-RT RIC platform sends first subscription success information to the xAPP platform.

At S304: the base station periodically sends RIPs and/or IOTs (i.e., uplink interference information) within multiple historical time periods to the Near-RT RIC platform according to the first data subscription request.

The base station sends the RIPs and/or the IOTs to the Near-RT RIC platform through the E2 interface.

At S305: the Near-RT RIC platform sends the RIPs and/or IOTs to the xAPP platform through the RIC API interface.

At S306: the xAPP platform calculates a predicted uplink interference value at a first moment based on the RIPs and/or IOTs within the multiple historical time periods. The predicted uplink interference value at the first moment may be a RIP and/or IOT respectively received on each RB/RBG when the UE is scheduled at the first moment. Specifically, the training and inference process of the AI model may be used to obtain the RIP and/or IOT respectively received on each transmission resource block when the UE is scheduled at the first moment.

At S307: the xAPP platform sends the predicted uplink interference value to the Near-RT RIC platform through the RIC API interface.

At S308: the Near-RT RIC platform sends the predicted uplink interference value to the base station through the E2 interface.

At S309: the base station feeds back first reception confirmation information to the Near-RT RIC platform.

At S310: the xAPP platform sends a second data subscription request to the Near-RT RIC platform through the RIC API interface.

At S311: the Near-RT RIC platform forwards the second data subscription request to the base station through the E2 interface.

The second data subscription request is used for requesting to subscribe to a user channel matrix.

At S312: the Near-RT RIC platform sends second subscription success information to the xAPP platform.

At S313: the base station sends a channel matrix to the Near-RT RIC platform according to the second data subscription request.

Optionally, the base station sends to the Near-RT RIC platform channel matrices corresponding to uplink reference signals received from the UE within the multiple historical time periods or requests scheduling to statistically receive channel matrices corresponding to uplink reference signals sent by UE at the current time. A channel matrix of the uplink reference signal received within each historical time period may be formed as a k * M * p dimensional matrix, where k is the number of subcarriers of the scheduled UE in the operating frequency domain, M is the number of antennas of the base station, p is the number of antennas of the UE, and represents a channel matrix of the uplink reference signal sent on the k-th subcarrier within each of the multiple historical time periods and sent from the p-th antenna of the UE to the r-th antenna of the base station; k, p, and r are each an integer greater than 0.

Specifically, according to Formula 1, the base station may determine the channel matrices corresponding to the uplink reference signals received from the UE within the multiple historical time periods, and the specific determination method may be described in conjunction with the above detailed description, and will not be repeated here.

At S314; the Near-RT RIC platform sends the channel matrices to the xAPP platform through the RIC API interface.

At S315: the xAPP platform determines a predicted channel matrix value for the UE to be scheduled at the first moment based on the received channel matrices corresponding to the uplink reference signals received from the UE within the multiple historical time periods.

Specifically, the xAPP platform may determine the predicted channel matrix value for the UE to be scheduled at the first moment according to the above-described Formulas 2 to 4, and the specific implementation process will not be described in detail here.

At S316: the xAPP platform sends the predicted channel matrix value to the Near-RT RIC platform through the RIC API interface.

At S317: the Near-RT RIC platform sends the predicted channel matrix value to the base station through the E2 interface.

At S318: the base station feeds back second reception confirmation information to the Near-RT RIC platform.

At S319: the base station determines the uplink channel quality of the scheduled UE service at the first moment based on the received predicted uplink interference value and the predicted channel matrix value at the first moment.

At S320: the base station selects, based on the determined uplink channel quality, an MCS according to an AMC enhancement algorithm.

At S321: the base station sends uplink scheduling control information to the UE at the first moment based on the selected MCS.

It should be noted that, in the embodiment of the present disclosure, the above-described operations S310 to S318 may be executed synchronously with the operations S301 to S309. That is, the first data subscription request and the second data subscription request are the same request, which is used to simultaneously request to subscribe to uplink interference information and a user channel matrix. The xAPP platform may obtain the predicted uplink interference value and/or the predicted channel matrix value according to the request, and send them to the base station synchronously through the Near-RT RIC platform.

In the embodiment of the present disclosure, the above-described implementation of determining the predicted uplink interference value and the predicted channel matrix value is the same as the implementation of determining the predicted uplink interference value and the predicted channel matrix value by performing the information prediction method by the base station, and the description thereof will not be repeated here.

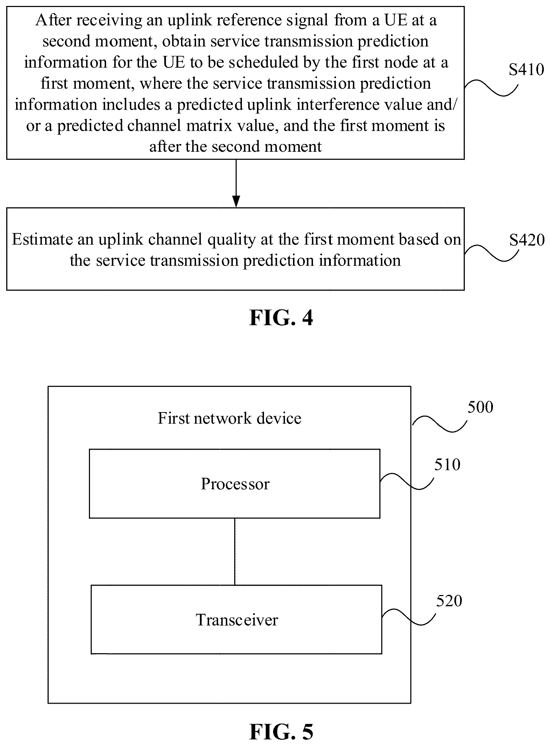

An embodiment of the present disclosure further provides an information prediction method, which is executed by a first node, and as shown in FIG. 4, the method includes the following operations.

At S410: after receiving an uplink reference signal from a UE at a second moment, service transmission prediction information for the UE to be scheduled by the first node at a first moment is obtained. The service transmission prediction information includes a predicted uplink interference value and/or a predicted channel matrix value. The first moment is after the second moment.

At S420, an uplink channel quality at the first moment is determined based on the service transmission prediction information.

Alternatively, the first node may be, but is not limited to, a base station.

According to the information prediction method according to the embodiment, the first network device can acquire an predicted uplink interference value and/or a predicted channel matrix value of a UE service scheduled by the base station at a first moment after the second moment when the uplink reference signal is received, and send the obtained predicted uplink interference value and/or the predicted channel matrix value to the first node, so that the first node can calculate an MCS value according to the determined uplink channel quality, and ensure that the selected MCS value can meet the channel quality at the time of uplink PUSCH data service transmission.

Compared with the related art, when the base station measures the uplink channel quality before the first moment, and schedules the uplink PUSCH data service transmission after the first moment, there is a problem that the channel quality changes, so that the selected MCS value does not meet the channel quality at the time of the uplink PUSCH data service transmission. By adopting the information prediction method described in the embodiments of the present disclosure, the base station can determine the uplink channel quality at the first moment based on the predicted uplink interference value and/or predicted channel matrix value of the UE service scheduled at the first moment after the second moment when the uplink reference signal is received, so as to use it for MCS value calculation, thereby ensuring that the selected MCS value can conform to the channel quality at the time of uplink PUSCH data service transmission.

Optionally, the information prediction method further includes the following operation.

Based on the uplink channel quality at the first moment, a modulation and coding strategy (MCS) value for sending a physical downlink control channel to the UE is determined.

Optionally, the information prediction method further includes the following operation.

A subscription request sent by a first network device is received. The subscription request is used for requesting to subscribe to measurement information corresponding to the UE obtained by the first node within a historical time period before the second moment.

First information is sent to the first network device according to the subscription request. The first information includes the measurement information.

The operation of obtaining the service transmission prediction information for the UE to be scheduled by the first node at the first moment includes that:

the service transmission prediction information sent by the first network device based on the first information is obtained.

Optionally, in the information prediction method, the subscription request includes at least one of the following: identification information of the subscribed UE, subscription content, or a reporting manner. The subscription content includes the measurement information requested for subscription. The measurement information includes uplink interference and/or a channel matrix.

Optionally, in the information prediction method, the reporting manner includes periodic reporting.

Optionally, in the information prediction method, the historical time period includes a previous reporting period of the current reporting period, and/or a time interval between the previous reporting period and the current reporting period.

Optionally, in the information prediction method, the operation of sending the first information to the first network device according to the subscription request includes that:

the first information is sent to the first network device in the reporting manner according to the subscription request.

Optionally, in the information prediction method, when the measurement information includes the uplink interference, the uplink interference requested to be subscribed by the subscription content is uplink interference respectively received on each transmission resource block in the operating frequency band of the serving cell in which the UE is located within multiple historical time periods.

When the measurement information includes the channel matrix, the channel matrix requested to be subscribed by the subscription content includes channel matrices corresponding to uplink reference signals received by the first node within the multiple historical time periods.

Optionally, in the information prediction method, the uplink interference respectively received on each transmission resource block includes a RIP and/or an IOT respective received on the each transmission resource block.

Optionally, in the information prediction method, the channel matrix is a $K \times M \times P$ dimensional matrix, K is a number of subcarriers in an operating frequency domain of the UE, P is a number of antennas of the UE, and M is a number of antennas of a receiving end of an uplink reference signal sent by the UE.

Optionally, in the information prediction method, when the service transmission prediction information includes an predicted uplink interference value, the operation of obtaining the predicted uplink interference value for the UE to be scheduled by the first node at the first moment includes that:

a predicted uplink interference value for the UE to be scheduled at the first moment is determined according to uplink interference respectively received on each transmission resource block in the operating frequency band of the serving cell in which the UE is located within multiple historical time periods before the second moment.

Optionally, in the information prediction method, when the service transmission prediction information includes a predicted channel matrix value, the operation of obtaining the predicted channel matrix value for the UE to be scheduled by the first node at the first moment includes that:

channel matrices of the uplink reference signals received within the multiple historical time periods are determined according to historical channel data corresponding to the uplink reference signals received from the UE within the multiple historical time periods before the second moment;
channel matrices of the uplink reference signals received within the multiple historical time periods are transformed to obtain channel characteristic data of the uplink reference signals received within the multiple historical time periods;
based on the channel characteristic data of the uplink reference signals received within the multiple historical time periods, a channel characteristic prediction value of the UE scheduled by the first node at a first moment is obtained; and
the channel characteristic prediction value is inversely transformed to obtain the predicted channel matrix value for the UE to be scheduled by the first node at the first moment.

According to this implementation, in one aspect, the first node (i.e., the base station) may predict the uplink interference of the UE to be scheduled at the first moment to obtain the service transmission prediction information, that is, the predicted uplink interference value and/or the predicted channel matrix value of the UE to be scheduled at the first moment can be obtained.

Optionally, in the information prediction method, the operation of determining the uplink channel quality at the first moment based on the service transmission prediction information includes that:
the uplink channel quality at the first moment is determined/estimated based on an predicted uplink interference value for the first node scheduling the UE at the first moment and a signal strength of an uplink reference signal received by the first node at the second moment.

Optionally, in the information prediction method, the operation of determining the uplink channel quality at the first moment based on the service transmission prediction information includes that:

a predicted signal strength of an uplink reference signal received by the first node from the UE at the first moment is determined based on a predicted channel matrix value for the UE to be scheduled by the first node at the first moment; and
the uplink channel quality at the first moment is determined/estimated based on the predicted signal strength and the predicted uplink interference value.

For the specific implementation when the information prediction method according to the embodiment of the present disclosure is applied to the first node, the detailed description in the specific implementation when the information prediction method is applied to the first network device may be referred to, and the description thereof will not be repeated here.

An embodiment of the present disclosure further provides a network device. The network device is a first network device. As shown in FIG. 5, the first network device 500 includes a processor 510 and a transceiver 520. The transceiver 520 is configured to send service transmission prediction information for scheduling a UE at a first moment to the first node.

The service transmission prediction information includes a predicted uplink interference value and/or a predicted channel matrix value. The first moment is after a second moment at which the first node acquires an uplink reference signal sent by the UE.

Optionally, the transceiver 520 in the network device is further configured to:

send a subscription request to the first node, where the subscription request is used for requesting to subscribe to measurement information corresponding to the UE obtained by the first node within a historical time period before the second moment; and
receive first information sent by the first node according to the subscription request, where the first information includes the measurement information.

The processor 510 is configured to determine the service transmission prediction information based on the first information.

Optionally, in the network device, the subscription request includes at least one of the following: identification information of a subscribed UE, subscription content, or a reporting manner. The subscription content includes the measurement information requested to be subscribed, and the measurement information includes uplink interference and/or a channel matrix.

Optionally, in the network device, the reporting manner includes periodic reporting.

Optionally, in the network device, the historical time period includes a previous reporting period of the current reporting period, and/or a time interval between the previous reporting period and the current reporting period.

Optionally, in the network device, the operation that the transceiver 520 receives the first information sent by the first node according to the subscription request includes that:
first information sent by the first node to the first network device in the reporting manner according to the subscription request is received. The first information includes the subscription content.

Optionally, in the network device, when the measurement information includes the uplink interference, the uplink interference requested to be subscribed by the subscription content includes uplink interference respectively received on each transmission resource block in an operating frequency band of the serving cell in which the UE is located within multiple historical time periods.

When the measurement information includes the channel matrix, the channel matrix requested to be subscribed by the subscription content includes channel matrices of uplink reference signals received by the first node within the multiple historical time periods.

Optionally, in the network device, the uplink interference respectively received on each transmission resource block includes a RIP respectively received on each transmission resource block and/or an IOT resepctively received on each transmission resource block.

Optionally, in the network device, the channel matrix is a K × M × P dimensional matrix, K is a number of subcarriers in an operating frequency domain of the UE, P is a number of antennas of the UE, and M is a number of antennas of a receiving end of an uplink reference signal sent by the UE.

Optionally, in the network device, the operation that the processor 510 determines the service transmission prediction information based on the first information includes that:

an predicted uplink interference value for the first node to schedule the UE at the first moment is determined based on the uplink interference; and/or a predicted channel matrix value for the first node to schedule the UE at the first moment is determined based on the channel matrix.

Optionally, in the network device, the operation that the processor 510 determines the predicted channel matrix value for the first node to schedule the UE at the first moment based on the channel matrix includes that:

channel matrices of the uplink reference signals received within the multiple historical time periods are transformed to obtain channel characteristic data of the uplink reference signals received within the multiple historical time periods;

a channel characteristic prediction value of the UE to be scheduled by the first node at the first moment is obtained based on the channel characteristic data of the uplink reference signals received within the multiple historical time periods; and

the channel characteristic prediction value is inversely transformed to obtain the predicted channel matrix value for the first node to schedule the UE at the first moment.

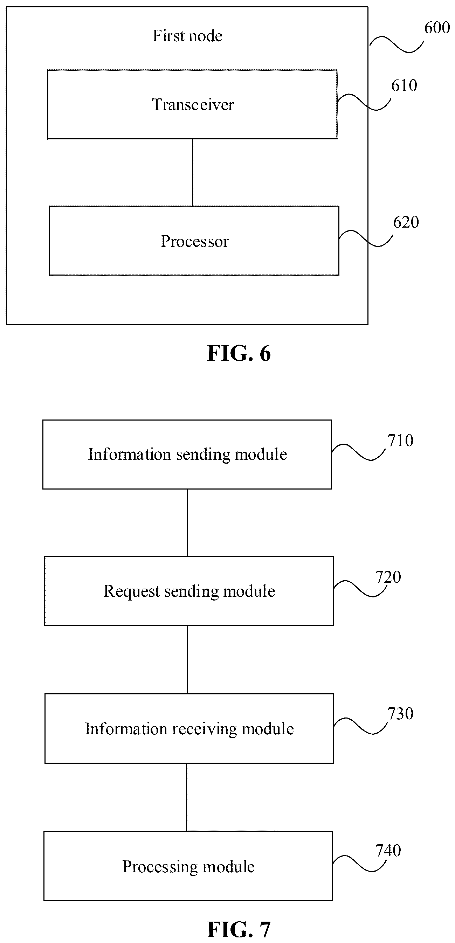

An embodiment of the present disclosure further provides a node device. The node device is a first node. As shown in FIG. 6, the first node 600 includes a transceiver 610 and a processor 620.

The transceiver 610 is configured to acquire service transmission prediction information for the first node to schedule a UE at a first moment after acquiring an uplink reference signal from the UE at a second moment. The service transmission prediction information includes a predicted uplink interference value and/or a predicted channel matrix value. The first moment is after the second moment.

The processor 620 is configured to determine/estimate an uplink channel quality at the first moment based on the service transmission prediction information.

Optionally, in the node device, the processor 620 is further configured to:

based on the uplink channel quality at the first moment, determine a modulation and coding strategy (MCS) value for sending a physical downlink control channel to the UE.

Optionally, in the node device, the transceiver 610 is further configured to:

receive a subscription request sent by a first network device, where the subscription request is used for requesting to subscribe to measurement information corresponding to the UE obtained by the first node at a historical time period before the second moment; and

send first information to the first network device according to the subscription request, where the first information includes the measurement information.

The operation that the transceiver 610 acquires the service transmission prediction information for the first node to schedule the UE at the first moment includes that: the service transmission prediction information sent by the first network device based on the first information is obtained.

Optionally, in the node device, the subscription request includes at least one of the following: identification information of a subscribed UE, subscription content, or a reporting manner. The subscription content includes the measurement information requested to be subscribed, and the measurement information includes uplink interference and/or a channel matrix.

Optionally, in the node device, the reporting manner includes periodic reporting.

Optionally, in the node device, the historical time period includes a previous reporting period of a current reporting period, and/or a time interval between the previous reporting period and the current reporting period.

Optionally, in the node device, the operation that the transceiver 610 sends the first information to the first network device according to the subscription request includes that: the first information is sent to the first network device in the reporting manner according to the subscription request.

Optionally, in the node device, when the measurement information includes the uplink interference, the uplink interference requested to be subscribed by the subscription content includes uplink interference respectively received on each transmission resource block in an operating frequency band of the serving cell in which the UE is located within multiple historical time periods.

When the measurement information includes the channel matrix, the channel matrix requested to be subscribed by the subscription content includes channel matrices corresponding to uplink reference signals received by the first node within the multiple historical time periods.

Optionally, in the node device, the uplink interference respectively received on each transmission resource block includes a RIP respectively received on each transmission resource block and/or an IOT respectively received on each transmission resource block.

Optionally, in the node device, the channel matrix is a K × M × P dimensional matrix, K is a number of subcarriers in an operating frequency domain of the UE, P is a number of antennas of the UE, and M is a number of antennas of a receiving end of an uplink reference signal sent by the UE.

Optionally, in the node device, when the service transmission prediction information includes an predicted uplink interference value, the operation that the transceiver 610 obtains the predicted uplink interference value of the UE to be scheduled by the first node at the first moment includes that:

a predicted uplink interference value for the UE to be scheduled at the first moment is determined based on the uplink interference respectively received on each transmission resource block in the operating frequency band of the serving cell in which the UE is located within the multiple historical time periods before the second moment.

Optionally, in the node device, when the service transmission prediction information includes a predicted channel matrix value, the operation that the transceiver 610 obtains the predicted channel matrix value for the first node to schedule the UE at the first moment includes that:

channel matrices of the uplink reference signals received within the multiple historical time periods are determined according to historical channel data corresponding to the uplink reference signals received from the UE within the multiple historical time periods before the second moment;
channel matrices of the uplink reference signals received within the multiple historical time periods are transformed to obtain channel characteristic data of the uplink reference signals received within the multiple historical time periods;
based on the channel characteristic data of the uplink reference signals received within the multiple historical time periods, a channel characteristic prediction value for the first node to schedule the UE at the firs moment is determined; and
the channel characteristic prediction value is inversely transformed to obtain the predicted channel matrix value for the first node to schedule the UE at the first moment.

Optionally, in the node device, when the processor 620 determines the uplink channel quality at the first moment based on the service transmission prediction information, the processor is specifically configured to:
determine an uplink channel quality at the first moment based on the predicted uplink interference value for the first node to schedule the UE at the first moment and a signal strength of an uplink reference signal received by the first node at the second moment.

Optionally, in the node device, when the processor 620 determines the uplink channel quality at the first moment based on the service transmission prediction information, the processor is specifically configured to:

determine a predicted signal strength of an uplink reference signal received by the first node from the UE at the first moment based on the predicted channel matrix value for the first node to schedule the UE at the first moment; and
determine the uplink channel quality at the first moment based on the predicted signal strength and the predicted uplink interference value.

An embodiment of the present disclosure further provides an apparatus for information prediction, which is applied to a first network device, and as shown in FIG. 7, the apparatus include an information sending module 710.

The information sending module 710 is configured to send service transmission prediction information for scheduling a UE at a first moment to a first node. The service transmission prediction information includes a predicted uplink interference value and/or a predicted channel matrix value. The first moment is after a second moment at which the first node acquires an uplink reference signal sent by the UE.

Optionally, the information prediction apparatus further includes a request sending module 720, an information receiving module 730, and a processing module 740.

The request sending module 720 is configured to send a subscription request to the first node. The subscription request is used for requesting to subscribe to measurement information corresponding to the UE obtained by the first node within a historical time period before the second moment.

The information receiving module 730 is configured to receive first information sent by the first node according to the subscription request. The first information includes the measurement information.

The processing module 740 is configured to determine the service transmission prediction information based on the first information.

Optionally, in the information prediction apparatus, the subscription request includes at least one of identification information of a subscribed UE, subscription content, or a reporting manner. The subscription content includes the measurement information requested to be subscribed, and the measurement information includes uplink interference and/or a channel matrix.

Optionally, in the information prediction apparatus, the reporting manner includes periodic reporting.

Optionally, in the information prediction apparatus, the historical time period includes a previous reporting period of a current reporting period, and/or a time interval between the previous reporting period and the current reporting period.

Optionally, in the information prediction apparatus, when the information receiving module 730 receives the first information sent by the first node according to the subscription request, it is specifically configured to:

receive first information sent by the first node to the first network device in the reporting manner according to the subscription request. The first information includes the subscription content.

Optionally, in the information prediction apparatus, when the measurement information includes the uplink interference, the uplink interference requested to be subscribed by the subscription content includes uplink interference respectively received on each transmission resource block in an operating frequency band of a serving cell in which the UE is located within multiple historical time period.

When measurement information includes a channel matrix, the channel matrix requested to be subscribed by the subscription content includes channel matrices corresponding to uplink reference signals received by the first node within the multiple historical time periods.

Optionally, in the information prediction apparatus, the uplink interference respectively received on each transmission resource block includes a RIP respectively received on each transmission resource block and/or an IOT respectively received on each transmission resource block.

Optionally, in the information prediction apparatus, the channel matrix is a $K \times M \times P$ dimensional matrix, K is a number of subcarriers in an operating frequency domain of the UE, P is a number of antennas of the UE, and M is a number of antennas of a receiving end of an uplink reference signal sent by the UE.

Optionally, in the information prediction apparatus, when the processing module 740 determines the service transmission prediction information based on the first information, the processing module 740 is specifically configured to:

determine an predicted uplink interference value for the first node scheduling UE at a first moment based on the uplink interference; and/or determine a predicted channel matrix value for the first node scheduling UE at the first moment based on the channel matrix.

Optionally, in the information prediction apparatus, when the processing module 740 determines the predicted channel matrix value for the first node scheduling UE at the first moment based on the channel matrix, it is specifically configured to:

transform channel matrices of the uplink reference signals received in multiple historical time periods to obtain channel characteristic data of the uplink reference signals received within the multiple historical time periods;

based on the channel characteristic data of the uplink reference signals received within the multiple historical time periods, obtain a channel characteristic prediction value for the first node to schedule the UE at the first moment; and

perform inverse transformation on the channel characteristic prediction value to obtain the predicted channel matrix value for the first node to schedule the UE at the first moment.

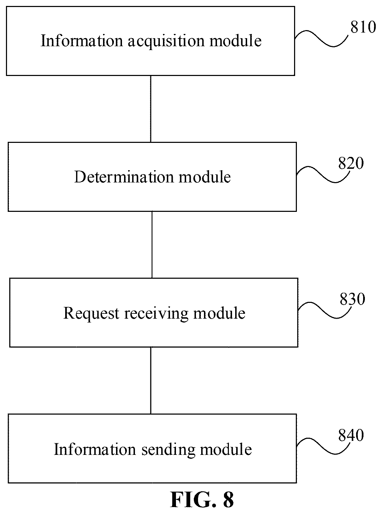

An embodiment of the present disclosure further provides an information prediction apparatus applied to a first node, and as shown in FIG. 8, the apparatus includes an information acquisition module 810 and a determination module 820.

The information acquisition module 810 is configured to acquire service transmission prediction information for the first node to schedule a UE at a first moment after acquiring an uplink reference signal from the UE at a second moment. The service transmission prediction information includes an predicted uplink interference value and/or a predicted channel matrix value. The first moment is after the second moment.

The determination module 820 is configured to determine/estimate an uplink channel quality at the first moment based on the service transmission prediction information.

Optionally, in the information prediction apparatus, the determination module 820 is further configured to:

based on the uplink channel quality at the first moment, determine a modulation and coding strategy (MCS) value for sending a physical downlink control channel to the UE.

Optionally, the information prediction apparatus further includes a request receiving module 830 and an information sending module 840.

The request receiving module 830 is configured to receive a subscription request sent by the first network device. The subscription request is used for requesting to subscribe to measurement information corresponding to the UE obtained by the first node at a historical time period before the second moment.

The information sending module 840 is configured to send first information to the first network device according to the subscription request. The first information includes the measurement information.

When the information acquisition module 810 acquires the service transmission prediction information for the first node to schedule the UE at the first moment, it is specifically configured to obtain the service transmission prediction information sent by the first network device according to the first information.

Optionally, in the information prediction apparatus, the subscription request includes at laset one of identification information of a subscribed UE, subscription content, or a reporting manner. The subscription content includes the measurement information requested for subscription, and the measurement information includes uplink interference and/or a channel matrix.

Optionally, in the information prediction apparatus, the reporting manner includes periodic reporting.

Optionally, in the information prediction apparatus, the historical time period includes a previous reporting period of a current reporting period, and/or a time interval between the previous reporting period and the current reporting period.

Optionally, in the information prediction apparatus, when the information sending module 840 sends the first information to the first network device according to the subscription request, it is specifically configured to send the first information to the first network in the reporting manner according to the subscription request.

Optionally, in the information prediction apparatus, when the measurement information includes uplink interference, the uplink interference requested to be subscribed by the subscription content includes uplink interference respectively received on each transmission resource block in an operating frequency band of the serving cell in which the UE is located within multiple historical time periods.

When the measurement information includes a channel matrix, the channel matrix requested to be subscribed by the subscription content includes channel matrices corresponding to uplink reference signals received by the first node within the multiple historical time periods.

Optionally, in the information prediction apparatus, the uplink interference respectively received on each transmission resource block includes a RIP respectively received on each transmission resource block and/or an IOT respectively received on each transmission resource block.

Optionally, in the information prediction apparatus, the channel matrix is a $K \times M \times P$ dimensional matrix, K is a number of subcarriers in an operating frequency domain of the UE, P is a number of antennas of the UE, and M is a number of antennas of a receiving end of an uplink reference signal sent by the UE.

Optionally, in the information prediction apparatus, the service transmission prediction information includes an predicted uplink interference value, and when the information acquisition module 810 acquires the predicted uplink interference value for the first node scheduling UE at the first moment, it is specifically configured to: determine an predicted uplink interference value for scheduling the UE at the first moment according to the uplink interference respectively received on each transmission resource block in the operating frequency band of the serving cell in which the UE is located within multiple historical time periods before the second moment.

Optionally, in the information prediction apparatus, the service transmission prediction information includes a predicted channel matrix value, and when the information acquisition module 810 acquires the predicted channel matrix value for the first node scheduling UE at the first moment, it is specifically configured to:

determine channel matrices of the uplink reference signals received within the multiple historical time periods according to historical channel data corresponding to the uplink reference signals received from the UE within the multiple historical time periods before the second moment;

transform channel matrices of the uplink reference signals received within the multiple historical time periods to obtain channel characteristic data of the uplink reference signals received within the multiple historical time periods;

based on the channel characteristic data of the uplink reference signals received within the multiple historical time periods, obtain a channel characteristic prediction value of the UE scheduled by the first node at the first moment; and

Perform inverse transformation on the channel characteristic prediction value to obtain the predicted channel matrix value for the first node to schedule the UE at the first moment.

Optionally, in the information prediction apparatus, when the determination module 820 determines/estimate the uplink channel quality at the first moment based on the service transmission prediction information, it is specifically configured to:

determine an uplink channel quality at the first moment based on the predicted uplink interference value for the first node to schedule the UE at the first moment and a signal strength of an uplink reference signal received by the first node at the second moment in time.

Optionally, in the information prediction apparatus, when the determination module 820 determines the uplink channel quality at the first moment based on the service transmission prediction information, it is specifically configured to:

determine a predicted signal strength of an uplink reference signal received by the first node from the UE at the first moment based on a predicted channel matrix value for the first node to schedule the UE at the first moment; and determine the uplink channel quality at the first moment based on the predicted signal strength and the predicted uplink interference value.

An embodiment of the present disclosure further provides a network device, the network device includes a processor, a memory, and a program stored in the memory and executable by the processor, and when the program is executed by the processor, the information prediction method according to any one of the items is implemented.

The network device is the first node or the first network device, and a specific embodiment of the information prediction method executed by a program running on the processor can refer to a detailed description when the information prediction method is applied to the network device, and the description will not be repeated here.

In addition, a specific embodiment of the present disclosure further provides a readable storage medium having a computer program stored thereon, the program implements the steps in the information prediction method as described in any one of the above when executed by a processor.

Specifically, when the readable storage medium is applied to the first node or the first network device described above, and when the readable storage medium is applied to the base station or the first network device, the corresponding execution steps in the adaptive modulation and coding method are as described in detail above, and will not be repeated herein.

In several embodiments provided by the present disclosure, it should be understood that the disclosed methods and apparatus may be implemented in other ways. For example, the device embodiments described above are merely schematic, for example, the division of units is only a logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

In addition, functional units in various embodiments of the present disclosure may be integrated into one processing unit, or each unit may be physically included separately, or two or more units may be integrated into one unit. The above integrated unit may be implemented in hardware or in the form of hardware plus software functional units.

The above-described integrated unit implemented in the form of software functional units may be stored in a computer-readable storage medium. The software functional unit is stored in a storage medium, and includes instructions for causing a computer device (which may be a personal computer, a server, or a network device, etc.) to perform some steps of the sending and receiving method according to various embodiments of the present disclosure. The storage medium includes a USB disk, a removable hard disk, a read-only memory (ROM), a random access memory (RAM), a magnetic disk, or an optical disk that can store a program code.

The above description is a preferred embodiment of the present disclosure, and it should be pointed out that for those skilled in the art, several improvements and retouches can be made without departing from the principles of the present disclosure, and these improvements and retouches should also be considered within the scope of protection of the present disclosure.

**Claims**

1. A method for information prediction, performed by a first network device, the method comprising:
   sending, to a first node, service transmission prediction information for user equipment (UE) to be scheduled at a first moment, wherein the service transmission prediction information comprises at least one of a predicted uplink interference value or a predicted channel matrix value, and the first moment is after a second moment at which the first node receives an uplink reference signal sent by the UE.

2. The method of claim 1, further comprising:

   sending a subscription request to the first node, wherein the subscription request is used for requesting to subscribe to measurement information corresponding to the UE obtained by the first node within a historical time period before the second moment;
   receiving first information sent by the first node according to the subscription request, wherein the first information comprises the measurement information; and
   determining the service transmission prediction information based on the first information.

3. The method of claim 2, wherein the subscription request comprises at least one of the following: identification information of a subscribed UE, subscription content, or a reporting manner,
   wherein the subscription content comprises the measurement information requested to be subscribed, and the measurement information comprises at least one of uplink interference or a channel matrix.

4. The method of claim 3, wherein the reporting manner comprises periodic reporting.

5. The method of claim 2, wherein the historical time period comprises at least one of the following:

   a previous reporting period of a current reporting period; or
   a time interval between the previous reporting period and the current reporting period.

6. The method of claim 3, wherein receiving the first information sent by the first node according to the subscription request comprises:
   receiving the first information sent by the first node to the first network device in the reporting manner according to the subscription request, wherein the first information comprises the subscription content.

7. The method of claim 3, wherein

   when the measurement information comprises the uplink interference, the uplink interference requested to be subscribed by the subscription content comprises uplink interference respectively received on each transmission resource block in an operating frequency band of a serving cell where the UE is located within multiple historical time periods;
   when the measurement information comprises the channel matrix, the channel matrix requested to be subscribed by the subscription content comprises channel matrices of uplink reference signals received by the first node within the multiple historical time periods.

8. The method of claim 7, wherein the uplink interference respectively received on each transmission resource block comprises at least one of the following:

   an interference power (RIP) respectively received on each transmission resource block; or
   an interference over thermal (IOT) respectively received on each transmission resource block.

9. The method of claim 7, wherein the channel matrix is a $K \times M \times P$ dimensional matrix, K is a number of subcarriers in an operating frequency domain of the UE, P is a number of antennas of the UE, and M is a number of antennas of a receiving end of an uplink reference signal sent by the UE.

10. The method of claim 6, wherein determining the service transmission prediction information based on the first information comprises at least one of the following:

    determining, based on the uplink interference, the predicted uplink interference value for the UE to be scheduled by the first node at the first moment; or
    determining, based on the channel matrix, the predicted channel matrix value for the UE to be scheduled by the first node at the first moment.

11. The method of claim 10, wherein determining, based on the channel matrix, the predicted channel matrix value for the UE to be scheduled by the first node at the first moment comprises:

    transforming channel matrices of uplink reference signals received within multiple historical time periods to obtain channel characteristic data of the uplink reference signals received within the multiple historical time periods;
    based on the channel characteristic data of the uplink reference signals received within the multiple historical time periods, obtaining a channel characteristic prediction value for the UE to be scheduled by the first node at the first moment; and
    performing inverse transformation on the channel characteristic prediction value to obtain the predicted channel matrix value for the UE to be scheduled by the first node at the first moment.

12. A method for information prediction, performed by a first node, the method comprising:

    obtaining service transmission prediction information for user equipment (UE) to be scheduled by the first node at a first moment after receiving an uplink reference signal from the UE at a second moment, wherein the service transmission prediction information comprises at least one of a predicted uplink interference value or a predicted channel matrix value, and the first moment is after the second moment; and
    estimating an uplink channel quality at the first moment based on the service transmission prediction information.

13. The method of claim 12, further comprising:

determining, based on the uplink channel quality at the first moment, a modulation and coding strategy (MCS) value for sending a physical downlink control channel (PDCCH) to the UE.

14. The method of claim 12, further comprising:

receiving a subscription request sent by a first network device, wherein the subscription request is used for requesting to subscribe to measurement information corresponding to the UE obtained by the first node within a historical time period before the second moment; and

sending first information to the first network device according to the subscription request, wherein the first information comprises the measurement information;

wherein obtaining the service transmission prediction information for the UE to be scheduled at the first moment comprises:

obtaining the service transmission prediction information sent by the first network device based on the first information.

15. The method of claim 14, wherein the subscription request comprises at least one of the following: identification information of a subscribed UE, subscription content, or a reporting manner,

wherein the subscription content comprises the measurement information requested to be subscribed, and the measurement information comprises at least one of uplink interference or a channel matrix.

16. The method of claim 15, wherein the reporting manner comprises periodic reporting.

17. The method of claim 14, wherein the historical time period comprises at least one of the following:

a previous reporting period of a current reporting period; or

a time interval between the previous reporting period and the current reporting period.

18. The method of claim 15, wherein sending the first information to the first network device according to the subscription request comprises:

sending, according to the subscription request, the first information to the first network device in the reporting manner.

19. The method of claim 15, wherein

when the measurement information comprises the uplink interference, the uplink interference requested to be subscribed by the subscription content comprises uplink interference respectively received on each transmission resource block in an operating frequency band of a serving cell where the UE is located within multiple historical time periods;

when the measurement information includes the channel matrix, the channel matrix requested to be subscribed by the subscription content comprises channel matrices of uplink reference signals received by the first node within the multiple historical time periods.

20. The method of claim 19, wherein the uplink interference respectively received on each transmission resource block comprises at least one of the following:

an interference power (RIP) respectively received on each transmission resource block; or

an interference over thermal (IOT) respectively received on each transmission resource block.

21. The method of claim 19, wherein the channel matrix is a $K \times M \times P$ dimensional matrix, K is a number of subcarriers in an operating frequency domain of the UE, P is a number of antennas of the UE, and M is a number of antennas of a receiving end of an uplink reference signal sent by the UE.

22. The method of claim 12, wherein when the service transmission prediction information comprises the predicted uplink interference value, obtaining the predicted uplink interference value for the UE to be scheduled by the first node at the first moment comprises:

determining the predicted uplink interference value for the UE to be scheduled at the first moment based on uplink interference respectively received on each transmission resource block in an operating frequency band of a serving cell in which the UE is located within multiple historical time periods before the second moment.

23. The method of claim 12, wherein when the service transmission prediction information comprises the predicted channel matrix value, obtaining the predicted channel matrix value for the UE to be scheduled by the first node at the first moment comprises:

determining channel matrices of uplink reference signals received within multiple historical time periods based on historical channel data of the uplink reference signals received from the UE within the multiple historical time periods before the second moment;

transforming channel matrices of the uplink reference signals received within the multiple historical time periods to obtain channel characteristic data of the uplink reference signals received within the multiple historical time periods;

obtaining a channel characteristic prediction value for the UE to be scheduled by the first node at the first moment based on the channel characteristic data of the uplink reference signals received within the multiple historical time periods; and

performing inverse transformation on the channel characteristic prediction value to obtain the predicted channel matrix value for the UE to be scheduled by the first node at the first moment.

24. The method of claim 12, wherein estimating the uplink channel quality at the first moment based on the service transmission prediction information comprises:
estimating the uplink channel quality at the first moment based on the predicted uplink interference value for the UE to be scheduled by the first node at the first moment and a signal strength of the uplink reference signal received by the first node at the second moment.

25. The method of claim 12, wherein estimating the uplink channel quality at the first moment based on the service transmission prediction information comprises:

determining a predicted signal strength of an uplink reference signal received by the first node from the UE at the first moment based on the predicted channel matrix value for the first node to schedule the UE at the first moment; and

estimating the uplink channel quality at the first moment based on the predicted signal strength and the predicted uplink interference value.

26. A network device, wherein the network device is a first network device and comprises:
a transceiver, configured to send, to a first node, service transmission prediction information for user equipment (UE) to be scheduled at a first moment, wherein the service transmission prediction information comprises at least one of an predicted uplink interference value or a predicted channel matrix value, and the first moment is after a second moment at which the first node receives an uplink reference signal sent by the UE.

27. A node device, wherein the node device is a first node and comprises:

a transceiver, configured to obtain service transmission prediction information for user equipment (UE) to be scheduled by the first node at a first moment after receives an uplink reference signal from the UE at a second moment, wherein the service transmission prediction information comprises at least one of an predicted uplink interference value or a predicted channel matrix value, and the first moment is after the second moment; and
a processor, configured to estimate an uplink channel quality at the first moment based on the service transmission prediction information.

28. An apparatus for information prediction, applied to a first network device, the apparatus comprising:
an information sending module, configured to send, to a first node, service transmission prediction information for user equipment (UE) to be scheduled at a first moment, wherein the service transmission prediction information comprises at least one of an predicted uplink interference value or a predicted channel matrix value, and the first moment is after a second moment at which the first node receives an uplink reference signal sent by the UE.

29. An apparatus for information prediction, applied to a first node, the apparatus comprising:

an information acquisition module, configured to acquire service transmission prediction information for user equipment (UE) to be scheduled by the first node at a first moment after receiving an uplink reference signal from the UE at a second moment, wherein the service transmission prediction information comprises at least one of an predicted uplink interference value or a predicted channel matrix value, and the first moment is after the second moment; and

a determination module, configured to estimate an uplink channel quality at the first moment based on the service transmission prediction information.

30. A network device, comprising:

a processor;
a memory; and
a program stored on the memory and executable by the processor,
wherein the program, when executed by the processor, implements:

the method for information prediction of any one of claims 1 to 11; or
the method for information prediction of any one of claims 12 to 25.

31. A readable storage medium having stored thereon a program which, when executed by a processor, implements the method for information prediction of any one of claims 1 to 11 or implements the method for information prediction of any one of claims 12 to 25.

Send service transmission prediction information for a UE to be scheduled at a first moment to a first node, where the service transmission prediction information includes a predicted uplink interference value and/or a predicted channel matrix value, and the first moment is after a second moment at which the first node receives an uplink reference signal sent by the terminal ⌇ S110

**FIG. 1**

| First network device | Base station | UE |
|---|---|---|

**Uplink interference prediction**

S201, Send a first data subscription request to the base station

S202, Send RIPs and/or IOTs within multiple historical time periods to the first network device

S203, Calculate a predicted uplink interference value at a first moment

S204, Send the predicted uplink interference value to the base station

**Channel matrix prediction**

S205, Send a second data subscription request to the base station

S206, Send the channel matrix to the first network device

S207, Determine a channel matrix prediction value for the UE to be scheduled at the first moment

S208, Send the predicted channel matrix value to the base station

S209, The base station determines an uplink channel quality for scheduling a UE service at the first moment

S210, Select, based on the determined uplink channel quality, an MCS according to an AMC enhancement algorithm

S211, Send uplink scheduling control information to the UE

**FIG. 2**

| Near-RT RIC | xAPP | Base station | UE |
|---|---|---|---|

**Uplink interference data acquisition**

S301, Send a first data subscription request to a Near-RT RIC platform

S302,Forward the first data subscription request to the base station through an E2 interface

S30, Send first subscription success information to the xAPP platform

S304,Send RIPs and/or IOTs within multiple historical time periods to the Near-RT RIC platform

S305,Send the RIPs and/or IOTs to the xAPP platform through an RIC API interface

S306,Calculate a predicted uplink interference value at a first moment

**Transmission of the predicted uplink interference value**

S307, Send the predicted uplink interference value to the Near-RT RIC platform through the RIC API interface

S308,Send the uplink interference prediction value to the base station through the E2 interface

S309,The base station feeds back first reception confirmation information to the Near-RT RIC platform

**Channel matrix data acquisition**

S310,Send a second data subscription request to the Near-RT RIC platform

S311,Forward the second data subscription request to the base station through the E2 interface

S312,Send second subscription success information to the xAPP platform

S313,Send channel matrixes within the multiple historical time periods to the Near-RT RIC platform

S314,Send the channel matrixes to the xAPP platform through the RIC API interface

S315,Calculate a channel matrix prediction value at the first moment

**Sending the predicted channel matrix value**

S316, Send the predicted channel matrix value to the Near-RT RIC platform through the RIC API interface

S317,Send the channel matrix prediction value to the base station through the E2 interface

S318,The base station feeds back second reception confirmation information to the Near-RT RIC platform

S319,The base station determines the uplink channel quality of the UE to be scheduled at the first moment

S320,Select, based on the determined uplink channel quality, an MCS according to an AMC enhancement algorithm

S321,Send uplink scheduling control information to the UE

**FIG. 3**

After receiving an uplink reference signal from a UE at a second moment, obtain service transmission prediction information for the UE to be scheduled by the first node at a first moment, where the service transmission prediction information includes a predicted uplink interference value and/ or a predicted channel matrix value, and the first moment is after the second moment

S410

Estimate an uplink channel quality at the first moment based on the service transmission prediction information

S420

**FIG. 4**

First network device

500

Processor

510

Transceiver

520

**FIG. 5**

First node 600

Transceiver 610

Processor 620

**FIG. 6**

Information sending module 710

Request sending module 720

Information receiving module 730

Processing module 740

**FIG. 7**

Information acquisition module — 810

Determination module — 820

Request receiving module — 830

Information sending module — 840

**FIG. 8**

## INTERNATIONAL SEARCH REPORT

| | International application No. |
|---|---|
| | **PCT/CN2024/100879** |

| A. | CLASSIFICATION OF SUBJECT MATTER |
|---|---|

H04L41/147(2022.01)i

According to International Patent Classification (IPC) or to both national classification and IPC

| B. | FIELDS SEARCHED |
|---|---|

Minimum documentation searched (classification system followed by classification symbols)

IPC: H04W36/- H04W24/- H04W52/- H04B17/- H04L41/-

Documentation searched other than minimum documentation to the extent that such documents are included in the fields searched

Electronic data base consulted during the international search (name of data base and, where practicable, search terms used)

CNABS, CNTXT, CNKI, VEN, EPTXT, WOTXT, USTXT, 3GPP, IEEE: 调制, 编码, 参考信号, 测量, 测量信息, 测算, 干扰, 估测, 基站, 节点, 历史, 评估, 前一时刻, 上行, 上行参考信号, 上一时间, 上一时刻, 时延, 推测, 网络设备, 信道, 信道矩阵, 训练, 延迟, 预测, 预估, 预计, 噪声, 周期, BS, channel matrix, CRS, CSI, eNB, GNB, interference, IOT, matrix, MCS, network device, node, noise, reference, RIC, RIP, RS, signal, SINR, SNR, SRS, UL, uplink, schedul+, select+, predict+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 109076403 A (HUAWEI TECHNOLOGIES CO., LTD.) 21 December 2018 (2018-12-21) description, paragraphs [0035]-[0058] and [0094]-[0101] | 1-31 |
| A | CN 106488481 A (VIAVI SOLUTIONS UK LTD.) 08 March 2017 (2017-03-08) entire document | 1-31 |
| A | US 2020106536 A1 (NOKIA SOLUTIONS & NETWORKS OY) 02 April 2020 (2020-04-02) entire document | 1-31 |
| A | WO 2016133438 A1 (TELEFONAKTIEBOLAGET LM ERICSSON (PUBL)) 25 August 2016 (2016-08-25) entire document | 1-31 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 September 2024** | **05 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/100879**

| Patent document cited in search report | | | Publication date (day/month/year) | Patent family member(s) | | | Publication date (day/month/year) |
|---|---|---|---|---|---|---|---|
| CN | 109076403 | A | 21 December 2018 | WO | 2017186309 | A1 | 02 November 2017 |
| | | | | VN | 61827 | A | 25 February 2019 |
| | | | | CN | 109076403 | B | 07 August 2020 |
| CN | 106488481 | A | 08 March 2017 | EP | 3136775 | A1 | 01 March 2017 |
| | | | | EP | 3136775 | B1 | 20 February 2019 |
| | | | | US | 2017064591 | A1 | 02 March 2017 |
| | | | | US | 10117142 | B2 | 30 October 2018 |
| | | | | CN | 106488481 | B | 21 January 2020 |
| US | 2020106536 | A1 | 02 April 2020 | US | 2020252142 | A1 | 06 August 2020 |
| | | | | US | 11057129 | B2 | 06 July 2021 |
| WO | 2016133438 | A1 | 25 August 2016 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310763447